(19) Europäisches Patentamt
European Patent Office
Office européen des brevets

(11) **EP 1 937 019 A2**

(12) **EUROPÄISCHE PATENTANMELDUNG**

(43) Veröffentlichungstag:
25.06.2008 Patentblatt 2008/26

(51) Int Cl.:
*H04Q 7/38* (2006.01)

(21) Anmeldenummer: 07024009.8

(22) Anmeldetag: 11.12.2007

(84) Benannte Vertragsstaaten:
AT BE BG CH CY CZ DE DK EE ES FI FR GB GR
HU IE IS IT LI LT LU LV MC MT NL PL PT RO SE
SI SK TR
Benannte Erstreckungsstaaten:
AL BA HR MK RS

(30) Priorität: 18.12.2006 DE 102006059661
25.10.2007 DE 102007051139

(71) Anmelder: Björn Steiger Stiftung Service GmbH
70174 Stuttgart (DE)

(72) Erfinder:
• Jung, Peter, Prof.-Dr.
47051 Duisburg (DE)
• Waadt, Andreas, Dipl.-Ing.
47057 Duisburg (DE)
• Bruck, Guido, Dr.-Ing.
46562 Voerde (DE)

(74) Vertreter: Schoppe, Fritz et al
Patentanwälte
Schoppe, Zimmermann, Stöckeler & Zinkler
P.O. Box 246
82043 Pullach bei München (DE)

(54) **Sende-/Empfangsvorrichtung und Verfahren zur notfallbasierten Kommunikation in einem Mobilfunknetzwerk**

(57) Eine Sende-/Empfangsvorrichtung (100) zur Kommunikation in einem Mobilfunknetzwerk, die ausgebildet ist, um Funkdaten an das Mobilfunknetzwerk zu übermitteln. Die Sende-/Empfangsvorrichtung (100) umfasst eine Einrichtung (110) zum Detektieren einer Notfallsituation. Die Sende-/Empfangsvorrichtung (100) umfasst ferner eine Einrichtung (120) zum Bereitstellen von Notfalldaten, die von einer geografischen Position der Sende-/Empfangsvorrichtung (100) abhängen, wobei die Einrichtung zum Bereitstellen (120) ausgebildet ist, um unabhängig von einer detektierten Notfallsituation die Notfalldaten zu erfassen und zu aktualisieren, oder um ansprechend auf eine detektierte Notfallsituation die Notfalldaten zu erfassen. Ferner weist die Sende-/Empfangsvorrichtung (100) eine Einrichtung (130) zum Aufbauen einer Datenverbindung zu einem Informationszentrum auf, die ausgebildet ist, um ansprechend auf eine detektierte Notfallsituation die Datenverbindung aufzubauen und umfasst ferner eine Einrichtung (140) zum Übermitteln der Notfalldaten, die von der Einrichtung zum Bereitstellen (120) der Notfalldaten bereitgestellt werden, über die Datenverbindung an das Informationszentrum.

FIG.1

**Beschreibung**

Die vorliegende Erfindung bezieht sich auf die Lokalisierung von Mobilfunktelefonen bzw. Mobilfunkendgeräten in Mobilfunknetzwerken, insbesondere in Notfallsituationen.

Die Lokalisierung von Mobilfunktelefonen, insbesondere wenn diese nicht über einen eingebauten GPS-Empfänger (GPS = Global Positioning System) verfügen bzw. keine GPS-Abdeckung vorhanden ist, erfolgt in der konventionellen Technik durch Auswertung der Informationen, die durch die Verbindung der Mobilfunktelefone mit dem Mobilfunknetz und dessen Netzwerkinfrastruktur gewonnen werden können. Im Bereich der konventionellen Technik kann die Lokalisierung durch Auswertung einer Position eines Sendemastes einer Funkzelle vorgenommen werden, in die ein Mobilfunktelefon eingebucht ist. Manche Funkzellen sind durch sektorisierte Antennen gekennzeichnet, wobei in diesen Fällen das virtuelle Zentrum eines Sektors als Position des Mobilfunktelefons angegeben werden kann, in dem das Mobilfunktelefon eingebucht ist.

Diese Vorgehensweise erlaubt eine Positionsbestimmung eines Mobilfunktelefons, bzw. eines Mobilfunkendgerätes, nur mit einer eingeschränkten Genauigkeit. Dies ist insbesondere nachteilig in Situationen, in denen Notfälle auftreten und ein zeitnahes Eintreffen von Rettungskräften unabdinglich ist.

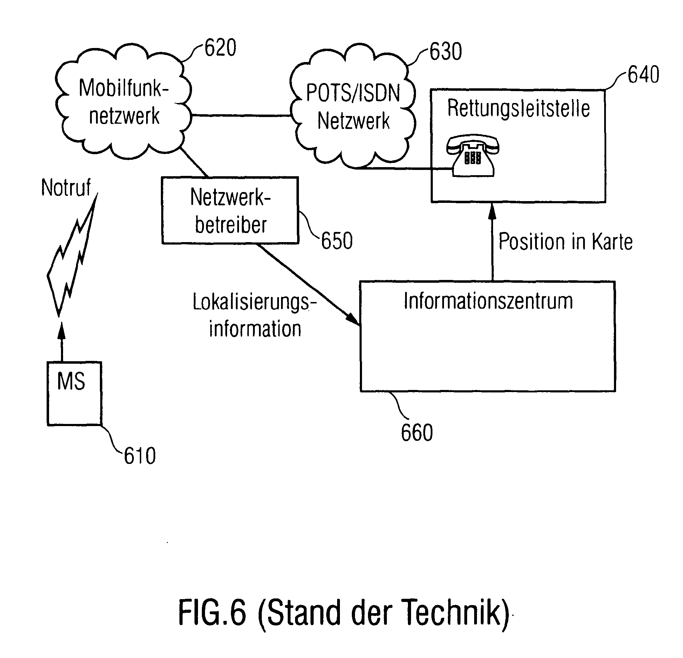

In der Fig. 6 ist ein Kommunikationsszenario in einer Notfallsituation beispielhaft dargestellt. Die Fig. 6 zeigt die Nutzung eines Lokalisierungsdienstes am Beispiel einer Alarmierung von Rettungsdiensten. In der Fig. 6 ist ein Mobilfunktelefon 610 (MS = Mobilstation) dargestellt, von dem aus ein Notruf (Emergency Call) ausgesendet wird, der über ein drahtloses Mobilfunknetz (PLM Network = Public Land Mobile Network) 620 und ein drahtgebundenes Netz 630, das durch ein POTS-Netzwerk (POTS = Plain Old Telephone Service bzw. Post Office Telephone Service) oder ein ISDN-Netzwerk (ISDN = Integrated Services Digital Network) realisiert sein kann, an eine Rettungsleitstelle 640 (Emergency Center) weitervermittelt wird. Durch eine Nutzung bisheriger konventioneller Location Services eines Netzwerkbetreibers 650 (PLMN Operator), wird eine Lokalisierungsinformation (Location Information from LBS, LBS = Location Based Services) an ein Informationszentrum 660 (IT-Center, IT = Information Technology) weitergegeben, das durch eine geeignete Software der Rettungsleitstelle 640 die berechnete Position des Mobilfunktelefons 610 auf einer Karte anzeigen kann (Location on Map), damit die Rettungskräfte an den richtigen Ort geleitet werden können.

Ein Nachteil der bisherigen Lösung ist die nur eingeschränkte Genauigkeit, mit der die Position eines Mobilfunktelefons oder Mobilfunkendgerätes bestimmt werden kann, so dass es zu Verzögerungen beim Einsatz der Rettungskräfte kommt, wobei dies gerade im Bereich der Notfälle schwerwiegende Konsequenzen nach sich ziehen kann.

Die DE 10345224 offenbart ein Verfahren zur Positionsschätzung einer Teilnehmerstation eines Funkkommunikationssystems, bei dem eine Empfangsstation von der Teilnehmerstation Berichte empfängt, die jeweils eine Information bezüglich einer Signalstärke eines Empfangssignals wenigstens einer sendenden Station am Ort der Teilnehmerstation enthalten. Die Berichte werden in einem Speicher einer Netzeinrichtung des Funkkommunikationssystems gespeichert und eine Positionsbestimmung berücksichtigt zumindest zwei vor der Aufforderung zur Positionsschätzung gespeicherte Berichte zur Positionsschätzung der Teilnehmerstation. Die Position der Teilnehmerstation kann dann durch Vergleich der Signalstärken mit einer Signalstärkendatenbank ermittelt werden. Das beschriebene Verfahren hat den Nachteil, dass die Position der Teilnehmerstation nur so genau bestimmt werden kann, wie es die Auflösung der Datenbank erlaubt. Ferner muss die Datenbank ausgemessen und gespeichert, bei Ausbau eines Netzes entsprechend aktualisiert werden. Eine Positionsbestimmung ist damit nur ungenau möglich.

Die WO 98/15149 offenbart ein Verfahren zur Positionsbestimmung einer Mobilstation in einem zellularen Netzwerk. Ein Netzwerkmanagementsystem empfängt dabei von einer Mobilstation Informationen über Feldstärkemessungen, die von der Mobilstation durchgeführt wurden. In einem nächsten Schritt werden die Feldstärkemessungen mit einer Feldstärkematrix verglichen, und die Position der Mobilstation, basierend auf den Koordinaten der Feldstärkematrix, zumindest in Relation zu der Basisstation, bei der die Mobilstation angemeldet ist und einer weiteren Basisstation, geschätzt. Dabei wird die Feldstärkemessung der Mobilstation möglichst genau an die Feldstärkeinformation in der Feldstärkematrix angepasst. Das hier beschriebene Verfahren hat den Nachteil, dass die Position nur ungenau bestimmt werden kann, da in der Feldstärkematrix nur Werte an bestimmten Orten vorliegen, die durch eine Messung ermittelt wurden. Ferner hat das beschriebene Verfahren den Nachteil, dass die Aktualisierung der Feldstärkematrix zusätzlichen Aufwand erzeugt.

Es ist die Aufgabe der vorliegenden Erfindung eine genauere und verbesserte Bestimmung einer Position eines Mobilfunkendgerätes zu ermöglichen, insbesondere in Notfallsituationen.

Die Aufgabe wird gelöst durch eine Sende-/Empfangsvorrichtung zur Kommunikation in einem Mobilfunknetzwerk gemäß Anspruch 1 und einem Verfahren zur Kommunikation in einem Mobilfunknetzwerk gemäß Anspruch 24.

Die Aufgabe wird gelöst durch eine Sende-/Empfangsvorrichtung zur Kommunikation in einem Mobilfunknetzwerk, die ausgebildet ist, um Funkdaten an das Mobilfunknetzwerk zu übermitteln. Die Sende-/Empfangsvorrichtung weist dabei eine Einrichtung zum Detektieren einer Notfallsituation auf und eine Einrichtung zum Bereitstellen von Notfalldaten, die von einer geografischen Position der Sende-/Empfangsvorrichtung abhängen. Die Einrichtung zum Bereitstellen der Notfalldaten ist dabei ausgebildet, um unabhängig von einer detektierten Notfallsituation die Notfalldaten zu erfassen und zu aktualisieren, oder um ansprechend auf eine detektierte Notfallsituation die Notfalldaten zu erfassen. Die Sende-/Empfangsvorrichtung umfasst ferner eine Einrichtung zum Aufbauen einer Datenverbindung zu einem Informationszentrum, die ausgebildet ist, um ansprechend auf eine detektierte Notfallsituation die Datenverbindung aufzubauen. Die Sende-/Empfangsvorrichtung umfasst ferner eine Einrichtung zum Übermitteln der Notfalldaten, die von der Einrichtung zum Bereitstellen der Notfalldaten bereitgestellt werden, über die Datenverbindung an das Informationszentrum.

Die Aufgabe wird ferner gelöst durch ein Verfahren zur Kommunikation in einem Mobilfunknetzwerk, um Funkdaten an das Mobilfunknetzwerk zu übermitteln. Das Verfahren umfasst einen Schritt des Detektierens einer Notfallsituation und einen Schritt des Bereitstellens von Notfalldaten, die von einer geografischen Position einer Sende-/Empfangsvorrichtung abhängen. Die Notfalldaten werden dabei unabhängig von einer detektierten Notfallsituation erfasst und aktualisiert, oder ansprechend auf eine detektierte Notfallsituation erfasst. Das Verfahren umfasst ferner einen Schritt des Aufbauens einer Datenverbindung zu einem Informationszentrum ansprechend auf eine detektierte Notfallsituation und einen Schritt des Übermittelns der bereitgestellten Notfalldaten über die Datenverbindung an das Informationszentrum.

Der Kerngedanke der vorliegenden Erfindung besteht darin, dass ein Mobilfunkendgerät oder eine Sende-/Empfangsvorrichtung prinzipiell Daten mehrerer Sender oder Basisstationen mehrerer Mobilfunknetzwerke, wie beispielsweise GSM (GSM = Global System for Mobile Communications), UMTS (UMTS = Universal Mobile Telecommunication System), WLAN (WLAN = Wireless Local Area Network), Bluetooth usw. erfassen kann, die in einer Notfallsituation automatisch über eine Datenverbindung übertragen werden können, um eine genauere Lokalisierung des Mobilfunkendgerätes vornehmen zu können. Eine Notfallsituation wird dabei in Ausführungsbeispielen durch eine Notruftaste, eine Notruftastenkombination, eine Notrufspracherkennung oder aber auch durch einen Notfallsensor realisiert. Die Notfalldaten können dabei mehrere Informationen aufweisen, beispielsweise werden in einem Ausführungsbeispiel Empfangspegel und/oder Laufzeitmessungen von Basisstations-Sende-Empfängern eines oder mehrerer Mobilfunknetze durchgeführt und im Falle einer Notfallsituation dem Informationszentrum zur Verfügung gestellt. Dabei kann die Sende-/Empfangsvorrichtung permanent Messwerte erfassen, oder aber ansprechend auf die Detektion einer Notfallsituation Messungen starten, die sowohl bei verschiedenen Frequenzen, mit verschiedenen Zugriffsverfahren, mit verschiedenen Funktechnologien, in Ad-Hoc-Netzwerken, in Multi-Hop-Netzwerken, usw. stattfinden.

Ferner können im Rahmen der Notfalldaten Informationen bereitgestellt werden, die zu früheren Zeitpunkten von der Sende-/Empfangsvorrichtung erfasst wurden, beispielsweise könnte so eine frühere Position bestimmt werden und relativ zu dieser eine aktuelle Position berechnet werden. Entsprechend ist es auch denkbar, dass in einem Ausführungsbeispiel, die Sende-/Empfangsvorrichtung nur relative Empfangspegel oder Empfangspegeländerungen überträgt. Generell sind sämtliche HF-Daten denkbar, d.h. die Sende-/Empfangsvorrichtung nutzt alle erdenklichen oder erfassbaren Daten, um eine möglichst genaue Positionsbestimmung zu ermöglichen. In einem Ausführungsbeispiel könnte die Sende-/Empfangsvorrichtung auch beispielsweise über Bluetooth oder eine andere Technologie eine weitere Sende-/Empfangsvorrichtung erreichen, die beispielsweise über einen GPS-Empfänger verfügt und somit ihre Koordinaten mitteilen kann. Aufgrund der begrenzten Reichweite der Bluetooth-Verbindung könnte die Sende-/Empfangsvorrichtung dann im Rahmen der Notfalldaten Informationen an das Informationszentrum schicken, die bereits Informationen über die eigenen Koordinaten enthalten.

Bevorzugte Ausführungsbeispiele der vorliegenden Erfindung werden nachfolgenden bezugnehmend auf die beiliegenden Zeichnungen näher erläutert. Es zeigen:

Fig. 1    ein Blockschaltbild eines Ausführungsbeispiels einer erfindungsgemäßen Sende-/Empfangsvorrichtung;

Fig. 2    ein schematisches Szenario zur Verdeutlichung der Positionsbestimmung gemäß einem Ausführungsbeispiel;

Fig. 3    ein weiteres schematisches Szenario zur Verdeutlichung der Positionsbestimmung gemäß einem anderen Ausführungsbeispiel;

Fig. 4    eine beispielhafte Darstellung verschiedener Empfangspegel;

Fig. 5    eine Tabelle, die eine Gewichtung verschiedner Empfangspegel in einem Ausführungsbeispiel der vorliegenden Erfindung verdeutlicht;

Fig. 6    ein schematisches Szenario zur Verdeutlichung einer Alarmierung einer Rettungsleitstelle in der konventionellen Technik.

Es wird an dieser Stelle darauf hingewiesen, dass in der folgenden Beschreibung die Begriffe Send-/Empfangsvorrichtung, Mobilfunkendgerät, Mobilfunktelefon, Mobilfunkgerät, Teilnehmerstation und Mobilstation synonym verwendet werden und diese Begriffe ein mobiles Gerät bezeichnen, dessen Position bestimmt wird. Als Basisstation oder Basisstations-Sende-Empfänger wird allgemein eine Funkstation bezeichnet, die entweder fest in einer Netzwerkinfrastruktur installiert ist oder zumindest eine bekannte Position aufweist und mit einem Mobilfunkendgerät kommunizieren kann. In den im Folgenden beschriebenen Ausführungsbeispielen kann eine Basisstation oder ein Basisstations-Sende-Empfänger auch durch ein Mobilfunkendgerät realisiert sein, sofern dessen Position bekannt ist. Beispielsweise könnte dies ein Mobilfunkendgerät sein, das einen integrierten GPS-Empfänger aufweist oder mit einem solchen in seiner Nähe kommuniziert, z.B. in einem Kraftfahrzeug.

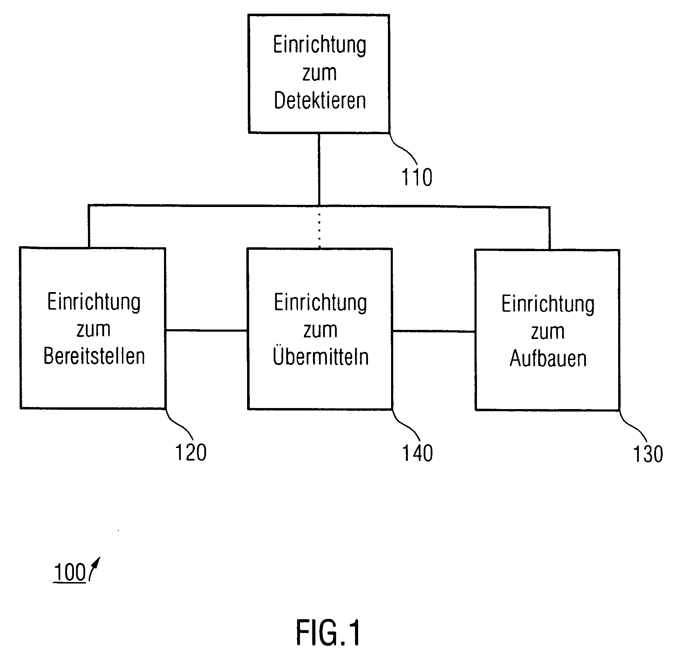

Die Fig. 1 zeigt eine Sende-/Empfangsvorrichtung 100 zur Kommunikation in einem Mobilfunknetz, die ausgebildet ist, um Funkdaten an das Mobilfunknetz zu übermitteln. Die Sende-/Empfangsvorrichtung 100 umfasst eine Einrichtung 110 zum Detektieren einer Notfallsituation. Ferner umfasst die Sende-/Empfangsvorrichtung 100 eine Einrichtung 120 zum Bereitstellen der Notfalldaten, die von einer geografischen Position der Sende-/Empfangsvorrichtung 100 abhängen, wobei die Einrichtung zum Bereitstellen 120 ausgebildet ist, um unabhängig von einer detektierten Notfallsituation die Notfalldaten zu erfassen und zu aktualisieren, oder um ansprechend auf eine detektierte Notfallsituation die Notfalldaten zu erfassen.

Die Sende-/Empfangsvorrichtung 100 weist ferner eine Einrichtung zum Aufbauen einer Datenverbindung zu einem Informationszentrum auf, die ausgebildet ist, um ansprechend auf eine detektierte Notfallsituation die Datenverbindung aufzubauen, und eine Einrichtung 140 zum Übermitteln der Notfalldaten, die von der Einrichtung zum Bereitstellen 120 der Notfalldaten bereitgestellt werden, über die Datenverbindung an das Informationszentrum.

In Ausführungsbeispielen der vorliegenden Erfindung kann die Einrichtung 110 zum Detektieren der Notfallsituation beispielsweise durch eine Notruftaste, eine Notruftastenkombination, eine Notrufspracherkennung oder einen Notfallsensor realisiert sein. Beispielsweise wäre es denkbar im Bereich eines Kraftfahrzeuges ein Mobilfunktelefon mit einem Bordnetz zu koppeln und einen Notruf auszulösen, sobald ein Airbag ausgelöst wird. In diesem Fall könnten dann in einem Ausführungsbeispiel Notfalldaten automatisiert übertragen werden, so dass in einem Informationszentrum direkt auf einer Karte der Ort, von dem aus der Notruf abgesetzt wurde, angezeigt wird.

Die Notfalldaten können dabei beispielsweise Empfangspegel oder Laufzeitmessungen von Basisstations-Sendern/Empfängern des Mobilfunknetzes umfassen, aber auch Empfangspegel oder Laufzeiten von Basisstations-Sende-Empfängern eines anderen Mobilfunknetzes. Insbesondere in Notfällen, können Ausführungsbeispiele der vorliegenden Erfindung auch fremde Netze, das heißt Mobilfunknetze von Netzbetreibern mit denen keine vertragliche Bindung besteht, verwenden. Dies schließt sowohl Netze anderer Netzbetreiber, als auch Netze anderer Frequenzen oder Zugangstechnologien wie beispielsweise GSM-Netze, UMTS-Netze, WLAN-Hotspots und auch Bluetooth-Sende-Empfänger ein. Beispielsweise könnte eine Sende-/Empfangsvorrichtung 100 im Falle einer detektierten Notfallsituation eine Verbindung über Bluetooth mit einem anderen Mobilfunkendgerät oder auch drahtgebunden gemäß obigem Beispiel z.B. mit einem Navigationssystem eines Kfz aufnehmen, um von diesem Positionskoordinaten zu erhalten, die dann an das Informationszentrum übertragen werden können. Generell sind jegliche HF-Daten wie Empfangspegelmessungen von Basisstationen verschiedener Frequenzen und Zugriffstechnologien, als auch entsprechende Laufzeitmessungen denkbar.

In einem weiteren Ausführungsbeispiel könnte die Sende-/Empfangsvorrichtung 100 auch Kontakt mit einem WLAN-Hotspot aufnehmen, der netzwerkseitig über eine IP-Adresse angesprochen wird. In einem Ausführungsbeispiel kann es möglich sein, dass das Übertragen dieser IP-Adresse an das Informationszentrum, das in diesem Ausführungsbeispiel Informationen über die Zuordnung von IP-Adressen hat, möglich sein, den Ort von dem aus die Datenverbindung aufgebaut wurde, relativ genau einzugrenzen. Beispielsweise könnte ein WLAN-Hotspot über seine IP-Adresse und dem zugehörigen Anschluss, in Ausführungsbeispielen über eine Telefonnummer und die dazugehörige tatsächliche Adresse identifiziert werden. Da die Reichweite von WLAN-Hotspots eingeschränkt ist, ergäbe sich daraus die Position der Sende-/Empfangsvorrichtung 100 bereits mit einer relativ hohen Genauigkeit.

In anderen Ausführungsbeispielen könnten die Notfalldaten Informationen umfassen, die die relative Position der Sende-/Empfangsvorrichtung 100 relativ zu einer bekannten Position angeben. Beispielsweise könnte ein Szenario auftreten, in dem die Sende-/Empfangsvorrichtung 100 in der Lage war, in nicht allzu ferner Vergangenheit eine genaue Positionsbestimmung durchzuführen, beispielsweise durch Kontakt mit einer anderen Sende-/Empfangsvorrichtung die eine relativ kurze Reichweite hatte und explizite GPS-Koordinaten zur Verfügung gestellt hat. In einem solchen Szenario können in Ausführungsbeispielen der vorliegenden Erfindung die Notfalldaten auch relative Daten zu einer bekannten Position umfassen. Dabei könnten beispielsweise Daten übertragen werden, die eine Position sehr genau definieren, die zu einem vergangenen Zeitpunkt vorlagen, und relativ dazu eine Verschiebung, die beispielsweise durch Empfangspegeländerungen, eine Geschwindigkeit, usw. bestimmt werden kann. Generell sind im Rahmen der Notfalldaten alle HF-Daten terrestrischer stationärer und mobiler Sender, die ihre Ortskoordinaten bestimmen und zur Verfügung stellen bzw. deren Ortskoordinaten bekannt sind, denkbar.

In weiteren Ausführungsbeispielen kann die Einrichtung zum Aufbauen der Datenverbindung ausgebildet sein, um die Notfalldaten über eine Kurznachricht zu übertragen. Kurznachrichten sind in konventionellen Mobilfunknetzwerken bereits etabliert, das heißt in einem Ausführungsbeispiel der vorliegenden Erfindung ist die Datenübertragung der Notfalldaten transparent für das Mobilfunknetzwerk. In einem anderen Ausführungsbeispiel, kann die erfindungsgemäße Sende-/Empfangsvorrichtung 100 auch über ein Ad-Hoc-Netzwerk oder über ein Multi-Hop-Netzwerk, das andere Mobilfunkendgeräte involvieren kann, eine Verbindung zu dem Informationszentrum aufbauen. Generell sind in den Ausführungsbeispielen jedoch jegliche Datenverbindungen möglich, die entweder vom Teilnehmer initiiert oder automatisch nach detektieren einer Notfallsituation aufgebaut werden, beispielsweise auch eine IP-Übertragung (IP = Internet Protocol) über das Internet www (www = World Wide Web).

In weiteren Ausführungsbeispielen wäre es denkbar, neben den Notfalldaten noch weitere Daten, wie beispielsweise medizinische Daten zu übertragen. Insbesondere bei bereits Erkrankten wäre es denkbar, im Rahmen der Notfalldaten aktuelle Vitalparameter mit zu übertragen, um neben einer schnellen Lokalisierung des Patienten auch eine möglichst gute Vorbereitung der Rettungskräfte auf den Notfall zu ermöglichen.

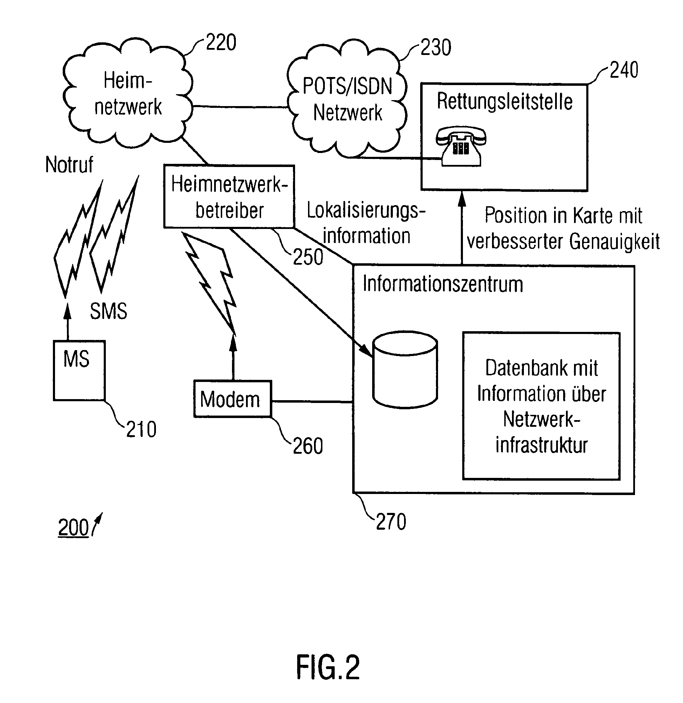

Fig. 2 zeigt eine schematische Darstellung eines Systems 200 zur Alarmierung von Rettungsdiensten gemäß einem Ausführungsbeispiel der vorliegenden Erfindung. Wie bereits anhand der Fig. 6 beschrieben initiiert ein Mobilfunkendgerät 210 einen Notruf (Emergency Call) in seinem Heimnetzwerk 220, welches hier beispielhaft als GSM-Netzwerk 220 angenommen ist. Prinzipiell sind anstatt des Heimnetzwerkes 220 auch andere Netzwerke denkbar, in die das Mobilfunkendgerät beispielsweise auch im Rahmen eines Roaming-Abkommens oder auch über IP (IP = Internet Protocol) eingebunden sein kann.

Zusätzlich zu dem aufgebauten Notruf (Emergency Call) sendet das Mobilfunktelefon oder Mobilfunkendgerät 210 Daten aus, beispielsweise in Form einer Nachricht, die die oben beschriebenen Werte enthält und die über eine SMS (Emergency SMS) realisiert sein kann. Der Notruf der Mobilstation 210 wird dann von deren Heimnetzwerk 220, oder dem Netz, in das die Mobilstation eingebucht ist, beispielsweise über ein weiteres Netzwerk 230, zum Beispiel POTS oder ISDN, an eine Rettungsleitstelle 240 (Emergency Center) weitergeleitet. Die vom Mobilfunkendgerät 210 ausgesendete Nachricht (Emergency SMS) wird über eine Datenverbindung an das Heimnetzwerk 220 übermittelt. Diese Nachricht kann beispielsweise eine oder mehrere Kurzmitteilungen (SMS) umfassen, die dann vom Heimnetzwerk 220 über den Heimnetzwerkbetreiber 250 und ggf. über ein geeignetes Sendeempfangsgerät 260 (Modem) an ein Informationszentrum 270 weitergeleitet wird bzw. werden. Das Informationszentrum (IT Center) verfügt in einer Datenbank über Informationen über die Netzinfrastruktur des Heimnetzwerkes 220 sowie über Infrastrukturen anderer Netze, die von anderen Netzwerkbetreibern betrieben werden, die auch über andere Technologien verwirklicht sein können. Die Datenbank im Informationszentrum wird in einem Ausführungsbeispiel regelmäßig von den verschiedenen Netzwerkbetreibern aktualisiert.

Die Informationen aus der Datenbank werden mit Hilfe der beispielsweise mittels einer Kurznachricht übertragenen Informationen ausgewertet, die Position kann dann bestimmt werden und auf einer Karte der Rettungsleitstelle 240 dargestellt werden. Das Mobilfunkendgerät kann dabei automatisch oder auch vom Teilnehmer initiiert, vor oder nach einem Notruf Einbuchvorgänge bei verschiedenen Basisstations-Sende-Empfängern von einem oder von verschiedenen Netzwerkbetreibern vornehmen, die im Notruffall möglich sind und diese zur Verbesserung der Genauigkeit der Positionsbestimmung des Mobilfunkendgerätes zur Verfügung stellen. Ferner kann in einem weiteren Ausführungsbeispiel der vorliegenden Erfindung das Mobilfunkendgerät ausgebildet sein, um sich falls möglich, in eine oder mehrere UMTS-Netze einzubuchen, sowie um Informationen über andere Netzwerke, wie beispielsweise WLAN-Hotspots zu sammeln. Das Mobilfunkendgerät kann ferner Informationen über die jeweilige Netzwerkinfrastruktur sammeln, indem es beispielsweise über einen gewissen Zeitraum hinweg Informationen speichert.

Dabei kann das Mobilfunkendgerät dann solche Werte übermitteln, die aus der nahen Vergangenheit stammen und Auskunft geben können über Positionen, an denen sich das Mobilfunktelefon kurz vor dem Notruf befunden hat. Eine Begrenzung der Menge dieser Werte ist erfindungsgemäß nicht gegeben, wohl aber im Hinblick auf eine einfache Realisierung gegeben. Beispielsweise wäre es denkbar, dass ein Mobilfunkendgerät, dass in der Lage ist beispielsweise über Bluetooth eine Verbindung zu einem anderen Mobilfunkgerät aufzubauen, das über seine genaue Position verfügt und diese im Falle eines Notrufes übermitteln kann denkbar, dass das Mobilfunkendgerät aufgrund der eingeschränkten Reichweite der Bluetooth-Verbindung diese Koordinaten direkt an das Informationszentrum übermittelt.

Die Übermittlung der Informationen an ein Netzbetreiberunabhängiges Informationszentrum hat den Vorteil, dass die Informationen verschiedener Netzbetreiber zur Positionsbestimmung ausgenutzt werden können. Es lässt sich somit eine erhöhte Genauigkeit der Positionsbestimmung erzielen, da mehr Informationen über Netzwerkumgebungen und auch verschiedene Netzwerkinfrastrukturen zur Verfügung stehen, als dies bei einer herkömmlichen, nur auf einer Netzwerkinfrastruktur beruhenden Positionsbestimmung, der Fall wäre.

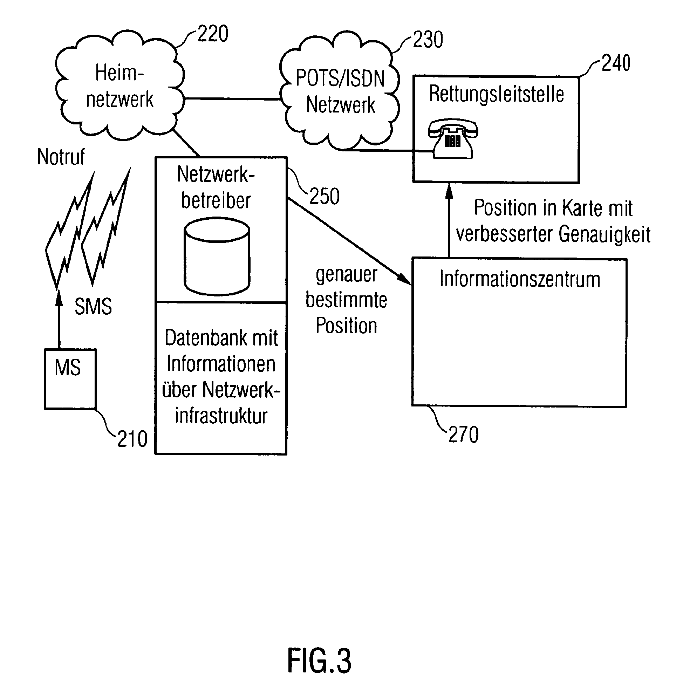

Alternativ kann jedoch die Bestimmung der Information auch vom Netzwerkbetreiber 250 übernommen werden, wie dies beispielhaft in der Fig. 3 dargestellt ist. Die Fig. 3 zeigt ein ähnliches Szenario wie bereits anhand der Fig. 2 beschrieben wurde, wobei gleiche Komponenten gleiche Bezugszeichen aufweisen. Der Unterschied des Szenarios in Fig. 3 im Vergleich zu dem Szenario, das in Fig. 2 dargestellt ist, ist, dass nun der Netzwerkbetreiber 250, der bereits über Informationen über seine eigene Netzinfrastruktur 220 verfügt, die ankommende Nachricht des Mobilfunkendgerätes 210 selbst auswertet und beispielsweise über Location Based Services (LBS) eine genauer bestimmte Position liefern kann, als das bisher der Fall war. In diesem Ausführungsbeispiel wird dann davon ausgegangen, dass der Netzwerkbetreiber Zugriff auf mehrere Netze hat bzw. mehrere Netze betreibt, um die von der Mobilstation 210 übermittelten Informationen entsprechend auswerten zu können.

Ausführungsbeispiele der vorliegenden Erfindung nutzen zur Positionsbestimmung eines Mobilfunkendgerätes Informationen, die dem Mobilfunkendgerät bekannt sind, bzw. von diesen bestimmt werden können und an eine geeigneten Stelle übermittelt werden, die über die Informationen der konventionellen Lokalisierungsverfahren hinausgehen. Die Informationen, die in Ausführungsbeispielen zur Bestimmung der Position eines Mobilfunkendgerätes genutzt werden können beispielsweise auch einen Wert eines Timings Advance in GSM-Netzen und TDD-UMTS-Netzen umfassen. Der Wert des Timing Advance (TA = Timing Advance) stellt in GSM-Netzen ein Maß für die Laufzeit des Signals von einem Basisstations-Sende-Empfänger oder BTS (BTS = Base Transceiver Station) zu einem Mobilfunkendgerät und zurück zur BTS in ganzen Bitperioden $T_b$ dar, wobei auf ganze Bitperioden gerundet wird. Mit 156,25 Bit in einem Zeitschlitz von 15/26ms, ergibt sich die Bitperiode zu

$$T_b = \frac{15ms}{26 \cdot 156,25} = \frac{30ms}{8125} \approx 3,69\mu s \qquad (1)$$

Es wird angenommen, dass der effektive Abstand zwischen einem Basisstations-Sende-Empfänger und einem Mobilfunkendgerät d sei, es ergibt sich mit der Bitperiode $T_b$ und der Lichtgeschwindigkeit $c = 3 \times 10^8$m/s für TA

$$TA = \left[\frac{2 \cdot d}{c \cdot T_b}\right] \approx \left[\frac{d}{554m}\right] \quad . \qquad (2)$$

Die eckige Klammer [ ] bedeutet hier, dass auf ganze Zahlen gerundet wird. Umgekehrt lässt sich aus TA der effektive Abstand

$$d \approx (TA + 0,5) \cdot 554m \qquad (3)$$

berechnen. Im Falle von GSM-Netzen beträgt die Ungenauigkeit der Quantisierung des TA etwa 277m. Für einen Timing Advance von TA = 1 folgt beispielsweise, dass sich das Mobilfunkendgerät in einem Abstand d von etwa 277m < d < 831m um den Basisstations-Sende-Empfänger befindet. Diese Werte werden beispielsweise durch Reflektionen und Beugungen der elektromagnetischen Wellen beeinflusst, so kann beispielsweise der Pfad einer elektromagnetischen Welle größer werden, als es dem tatsächlichen Abstand zwischen einem Mobilfunkendgerät und einer BTS entspricht, so dass der Abstand d im betrachteten Beispiel auch geringfügig kleiner als 277 m sein kann.

In TDD-UMTS-Netzen wird ein ähnlicher Wert ermittelt. Die Laufzeit der Funksignale zwischen einem Basisstations-Sende-Empfänger in FDD-UMTS-Netzen, in die ein Mobilfunkendgerät eingebucht ist, kann beispielsweise durch das folgende Verfahren bestimmt werden. Der Basisstations-Sende-Empfänger sendet ein erstes Funksignal und merkt sich, wann das erste Funksignal gesendet wurde. Die Mobilstation empfängt von diesem ersten Funksignal in der Regel mehrere durch Mehrwegeausbreitung hervorgerufene Echos zu unterschiedlichen Zeitpunkten. Das Mobilfunkendgerät sendet nach einer bestimmten Zeit $t_{TX-RX}$ eine Empfangsbestätigung an den Basisstations-Sende-Empfänger. Diese Zeitspanne, die zwischen dem Zeitpunkt des Empfangs des ersten Echos des ersten Funksignals bis zum Zeitpunkt des Sendens eines Referenzsignalwertes der Empfangsbestätigung liegt, kann gemessen werden. Die Empfangsbestätigung kann dann eine Information über den Wert von $t_{TX-RX}$ enthalten. Der Basisstations-Sende-Empfänger empfängt nun das Funksignal der Empfangsbestätigung durch in der Regel mehrere durch Mehrwegeausbreitung hervorgerufene Echos zu unterschiedlichen Zeitpunkten. Der Basisstations-Sende-Empfänger kann nun die Zeitdifferenz zwischen dem Empfang des ersten Echos des Referenzsignalwertes und dem Senden des ursprünglichen ersten Funksignals bestimmen. Die doppelte Laufzeit der Funksignale kann durch Abzug von $t_{TX-RX}$ ermittelt werden. Ferner kann in Ausführungsbeispielen der vorliegenden Erfindung die Laufzeit der Funksignale der Mobilfunkendgeräte durch ein weiteres Funksignal mitgeteilt werden, so dass dieses dem Mobilfunkendgerät dann vorliegt.

Ausführungsbeispiele der vorliegenden Erfindung berücksichtigen Empfangspegelmessungen zur Bestimmung der Position eines Mobilfunkendgerätes. Beispielsweise werden in GSM-Netzen in der Mobilstation empfangene Signalstärken, die als "RXLEV" bezeichnet werden, von bis zu sieben Basisstations-Sende-Empfängern (BTS) gemessen. Diese Signalstärken liegen in dem Mobilfunkendgerät als quantifizierte Werte vor und werden auch als RSSI (RSSI = Receiver Signal Strength Indicator) bezeichnet. Mit der logarithmischen Größe

$$p_e / dBm = 10 \cdot \lg(P_e / mW) \qquad\qquad (4)$$

der empfangenen Signalleistung $P_e$, gilt für den Zusammenhang zwischen Signalleistung und RSSI

$$RSSI = \left\{ \begin{bmatrix} 0 \\ \lceil 110 + p_e / dBm \rceil \\ 63 \end{bmatrix} \begin{array}{l} , wenn\ p_e \leq -110dBm \\ , wenn\ -110dBm < p_e \leq -47dBm \\ , wenn\ p_e > -47dBm \end{array} \right. \qquad (5)$$

Die unten geöffnete Klammer ⌐ ⌐ bezeichnet, dass der darin befindliche Wert aufgerundet werden soll. Beispielsweise bei RSSI = 62 liegt die logarithmische Empfangsleistung $p_e$ des Kontrollkanals BCCH (BCCH = Broadcast Control Channel) eines bedienenden Basisstations-Sende-Empfängers in einem Bereich zwischen -47dBm < $p_e$ ≤ -46dBm. Bei einer gleichverteilten Wahrscheinlichkeit ist in diesem Fall der Erwartungswert der logarithmischen Empfangsleistung zu $p_e$ = -46,5 dBm anzunehmen.

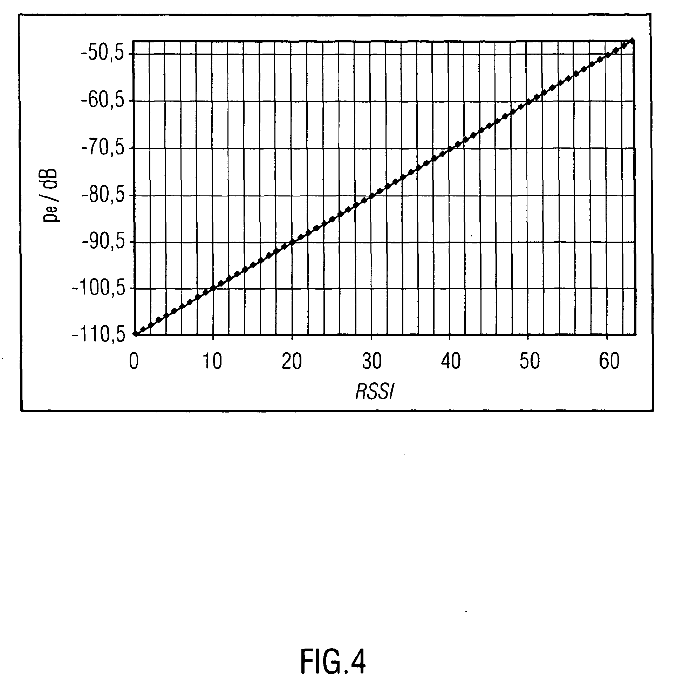

Die Fig. 4 zeigt beispielhaft eine Zuordnung zwischen Empfangsleistungen und RSSI, wobei in der Fig. 4 auf der Abzisse die RSSI-Werte aufgetragen sind und auf der Ordinate die logarithmische Empfangsleistung $p_e$ in dB. Die Fig. 4 zeigt eine lineare Zuordnung unter Verwendung der beschriebenen Skalen.

Auf Basis der bekannten Werte kann nun eine Position, beispielsweise nach zwei Raumrichtungen x und y ($x_{MS}$, $y_{MS}$) des Mobilfunkendgerätes aufgelöst, aus den Koordinaten der Basisstation ($x_{BTSi}$, $y_{BTSi}$) wie folgt bestimmt werden,

$$x_{MS} = \frac{1}{N_{BTS}} \sum_{i=1}^{N_{BTS}} g_{i,x} x_{BTSi}$$

$$\qquad\qquad , \qquad\qquad\qquad\qquad (6)$$

$$y_{MS} = \frac{1}{N_{BTS}} \sum_{i=1}^{N_{BTS}} g_{i,y} y_{BTSi}$$

wobei die $g_{i,x}$, $g_{i,y}$ die Gewichtungsfaktoren für die x- und y-Koordinaten eines i-ten Basisstations-Sende-Empfängers sind. Die Gewichtungsfaktoren können in einem Ausführungsbeispiel beispielsweise in dem Informationszentrum aus den von dem Mobilfunkendgerät ermittelten und übertragenen Daten bestimmt werden.

In einem Ausführungsbeispiel gilt für die Gewichtungen $g_{i,x}$ = $g_{i,y}$. In anderen Ausführungsbeispielen, zum Beispiel wenn das Mobilfunkendgerät Daten aus Regionen an den Grenzen eines Gebietes eines Netzbetreibers liefert oder z.B. an Küsten, etc., können die Gewichtungsfaktoren der einzelnen Raumrichtungen auch unterschiedlich gewählt werden.

In einem weiteren Ausführungsbeispiel sind alle Gewichtungsfaktoren $g_{i,x}$, $g_{i,y}$ gleich gewählt. Es wird somit der Schwerpunkt, der durch die Basisstations-Sende-Empfänger aufgebauten Fläche bestimmt mit $g_{i,x}$ = $g_{i,y}$ = 1.

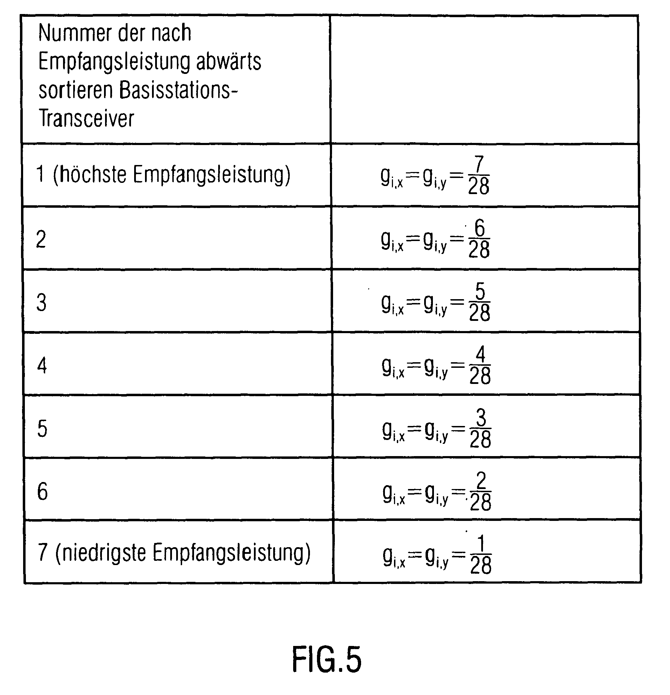

In einem weiteren Ausführungsbeispiel werden die Gewichtungsfaktoren $g_{i,x}$, $g_{i,y}$ beispielsweise in der Reihenfolge der Empfangspegel oder Empfangsleistungen abwärts mit konstanten Differenzen zwischen den einzelnen Gewichtungen gewählt. Fig. 5 zeigt ein Beispiel eines solchen Ausführungsbeispiels, bei dem davon ausgegangen wird, dass Empfangspegel von 7 Basisstations-Sende-Empfängern vorhanden sind. Die Tabelle in der Fig. 5 zeigt auf der linken Seite die Nummer der nach der Empfangsleistung oder des Empfangspegels abwärts sortierten Basisstations-Sende-Empfänger und in der rechten Spalte die zugehörigen Gewichtungsfaktoren.

In einem anderen Ausführungsbeispiel können die Gewichtungsfaktoren auch aus den gemessenen Empfangsleistungen oder Empfangspegeln direkt bestimmt werden. Je nach zugrundegelegtem Ausbreitungsmodell, bedeutet eine Veränderung der Empfangsleistung um 1 dB eine Veränderung des Abstands zwischen Basisstations-Sende-Empfänger und Mobilfunkendgerät um den Faktor 1,06 bis 1,13. Das Ausbreitungsmodell und somit auch dieser Faktor können an das jeweilige Szenario entsprechend angepasst werden. Die Gewichtungsfaktoren der schwächer empfangbaren Basisstations-Sende-Empfänger werden dann um dasselbe Maß reduziert, wie deren Empfangspegel.

Unter in Bezugnahme eines Ausbreitungsmodells, lassen sich aus den daraus gewonnenen Vorhersagen für die Empfangspegel in der Umgebung der Basisstations-Sende-Empfänger Wahrscheinlichkeitsdichten bestimmen, mit der sich ein Mobilfunkendgerät an einer bestimmten Stelle befindet. Aus Überlagerung der Wahrscheinlichkeitsdichten der einzelnen, durch das Mobilfunkendgerät empfangbaren Basisstations-Sende-Empfängern, kann die gesuchte Position des Mobilfunkendgerätes in einem anderen Ausführungsbeispiel ermittelt werden.

Wenn die Mobilstation oder das Mobilfunkendgerät Informationen über in der Vergangenheit liegende Messwerte liefert, kann für jeden zurückliegenden Zeitpunkt, für den Empfangspegelmessungen vorliegen, die Position der Mobilstation bestimmt werden. Wegen der zu erwartenden niedrigen Bewegungsgeschwindigkeit eines Mobilfunkendgerätes werden die wahren Positionen zeitlich benachbarter Empfangspegelmessungen nicht weit auseinander liegen. Durch eine geeignete Mittelwertbildung der berechneten Positionen, unter Berücksichtigung der Bestimmung einer Bewegungsgeschwindigkeit lässt sich die wahre Position in einem weiteren Ausführungsbeispiel genauer ermitteln, als wenn nur ein Satz von Empfangspegelmessungen zu einem Zeitpunkt ausgewertet wird.

Andere Ausführungsbeispiele erzielen eine zusätzliche Erhöhung der Genauigkeit, wenn lediglich eine Positionsbestimmung relativ zu einer bekannten Position vorgenommen wird, zu der entsprechende Empfangspegelmesswerte des Mobilfunkendgerätes vorliegen. Wahlweise kann das Mobilfunkendgerät in einem solchen Ausführungsbeispiel auch Empfangspegeländerungen übertragen, wie bereits oben erwähnt.

Ausführungsbeispiele der vorliegenden Erfindung bieten somit den Vorteil, dass eine Position eines Mobilfunkendgerätes innerhalb der Mobilfunknetze genauer bestimmt werden kann, und schaffen somit insbesondere in einer Notfallsituation den Vorteil, dass Rettungskräfte schneller an ihren Einsatzort gelangen.

Insbesondere wird darauf hingewiesen, dass abhängig von den Gegebenheiten das erfindungsgemäße Schema auch in Software implementiert werden kann. Die Implementation kann auf einem digitalen Speichermedium, insbesondere einer Diskette, einer CD oder einer DVD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. Mit anderen Worten ausgedrückt, kann die Erfindung somit als ein Computerprogramm mit einem Programmcode zur Durchführung des Verfahrens realisiert werden, wenn das Computerprogrammprodukt auf einen Computer abläuft.

Bezugszeichenliste

| | |
|---|---|
| 100 | Sende-/Empfangsvorrichtung |
| 110 | Einrichtung zum Detektieren einer Notfallsituation |
| 120 | Einrichtung zum Bereitstellen von Notfalldaten |
| 130 | Einrichtung zum Aufbau einer Datenverbindung |
| 140 | Einrichtung zum Übermitteln der Notfalldaten |

| | |
|---|---|
| 200 | System |
| 210 | Mobilstation |
| 220 | Heimnetzwerk |
| 230 | POTS/ISDN |
| 240 | Rettungsleitstelle |
| 250 | Heimnetzwerkbetreiber |
| 260 | Modem |
| 270 | Informationszentrum |

| | |
|---|---|
| 610 | Mobilstation |
| 620 | PLMN |
| 630 | POTS/ISDN |
| 640 | Emergency Center |
| 650 | PLMN-Operator |

660     Informationszentrum

**Patentansprüche**

1.  Sende-/Empfangsvorrichtung (100) zur Kommunikation in einem Mobilfunknetz, die ausgebildet ist, um Funkdaten an ein Mobilfunknetz zu übermitteln, mit folgenden Merkmalen:

    einer Einrichtung (110) zum Detektieren einer Notfallsituation;
    einer Einrichtung (120) zum Bereitstellen von Notfalldaten, die von einer geografischen Position der Sende-/Empfangsvorrichtung (100) abhängen, wobei die Einrichtung zum Bereitstellen (120) ausgebildet ist, um unabhängig von einer detektierten Notfallsituation die Notfalldaten zu erfassen und zu aktualisieren, oder um ansprechend auf eine detektierte Notfallsituation die Notfalldaten zu erfassen;
    eine Einrichtung (130) zum Aufbauen einer Datenverbindung zu einem Informationszentrum, die ausgebildet ist, um ansprechend auf eine detektierte Notfallsituation die Datenverbindung aufzubauen;
    eine Einrichtung (140) zum Übermitteln der Notfalldaten, die von der Einrichtung zum Bereitstellen (120) der Notfalldaten bereitgestellt werden, über die Datenverbindung an das Informationszentrum.

2.  Sende-/Empfangsvorrichtung (100) gemäß Anspruch 1, bei der die Einrichtung (110) zum Detektieren der Notfallsituation durch eine Notruftaste, eine Notruftastenkombination, eine Notrufspracherkennung oder einen Notrufsensor realisiert ist.

3.  Sende-/Empfangsvorrichtung (100) gemäß einem der Ansprüche 1 oder 2, bei der die Einrichtung (120) zum Bereitstellen der Notfalldaten ausgebildet ist, um Empfangspegel oder Signallaufzeiten von Basisstations-Sende-Empfängern des Mobilfunknetzes als Notfalldaten bereitzustellen.

4.  Sende-/Empfangsvorrichtung (100) gemäß einem der Ansprüche 1 bis 3, bei der die Einrichtung (120) zum Bereitstellen der Notfalldaten ausgebildet ist, um Empfangspegel oder Signallaufzeiten von Basisstations-Sende-Empfängern eines anderen Mobilfunknetzes als Notfalldaten bereitzustellen.

5.  Sende-/Empfangsvorrichtung (100) gemäß einem der Ansprüche 1 bis 4, bei der die Einrichtung (120) zum Bereitstellen der Notfalldaten ausgebildet ist, um Empfangspegel oder Signalpegellaufzeiten aus einem GSM-, UMTS-, WLAN- oder Bluetooth-Netz bereitzustellen.

6.  Sende-/Empfangsvorrichtung (100) gemäß einem der Ansprüche 1 bis 5, bei der die Einrichtung (120) zum Bereitstellen der Notfalldaten ausgebildet ist, um Notfalldaten bereitzustellen, die Feldstärken, Signallaufzeiten oder HF-Daten von Sendern in Reichweite der Sende-/Empfangsvorrichtung (100) umfassen.

7.  Sende-/Empfangsvorrichtung (100) gemäß Anspruch 6, bei der die Einrichtung (120) zum Bereitstellen der Notfalldaten ausgebildet ist, um die Feldstärken, Signallaufzeiten oder die HF-Daten bei verschiedenen Frequenzen zu erfassen.

8.  Sende-/Empfangsvorrichtung (100) gemäß einem der Ansprüche 1 bis 7, bei der die Einrichtung (120) zum Bereitstellen der Notfalldaten ausgebildet ist, um Notfalldaten bereitzustellen, die Feldstärken oder HF-Daten stationär terrestrischer Sender umfassen.

9.  Sende-/Empfangsvorrichtung (100) gemäß einem der Ansprüche 1 bis 8, bei der die Einrichtung (120) zum Bereitstellen der Notfalldaten ausgebildet ist, um mit einer anderen Sende-/Empfangsvorrichtung zu kommunizieren, um Notfalldaten zu erhalten oder deren Empfangspegel oder Signallaufzeiten in die Notfalldaten einzubinden.

10. Sende-/Empfangsvorrichtung (100) gemäß einem der Ansprüche 1 bis 9, bei der die Einrichtung (120) zum Bereitstellen der Notfalldaten ausgebildet ist, um Notfalldaten bereitzustellen, die eine IP-Adresse oder eine Identifikation einer anderen Sende-/Empfangsvorrichtung umfassen.

11. Sende-/Empfangsvorrichtung (100) gemäß einem der Ansprüche 1 bis 10, bei der die Einrichtung (120) zum Bereitstellen der Notfalldaten ausgebildet ist, um Notfalldaten bereitzustellen, die Informationen über Ortskoordinaten umfassen.

**12.** Sende-/Empfangsvorrichtung (100) gemäß einem der Ansprüche 1 bis 11, bei der die Einrichtung (120) zum Bereitstellen der Notfalldaten ausgebildet ist, um Notfalldaten bereitzustellen, die eine Laufzeit oder Laufzeitunterschiede umfassen.

**13.** Sende-/Empfangsvorrichtung (100) gemäß einem der Ansprüche 1 bis 12, bei der die Einrichtung (120) zum Bereitstellen der Notfalldaten ausgebildet ist, um Notfalldaten bereitzustellen, die von einer geografischen Position der Sende-/Empfangsvorrichtung (100) relativ zu einer bekannten Position abhängig sind.

**14.** Sende-/Empfangsvorrichtung (100) gemäß einem der Ansprüche 1 bis 13, bei der die Einrichtung (120) zum Bereitstellen der Notfalldaten ausgebildet ist, um Notfalldaten bereitzustellen, die von geografischen Positionen der Sende-/Empfangsvorrichtung (100) zu unterschiedlichen Zeitpunkten abhängen.

**15.** Sende-/Empfangsvorrichtung (100) gemäß einem der Ansprüche 1 bis 14, bei der die Einrichtung (120) zum Bereitstellen der Notfalldaten ausgebildet ist, um Notfalldaten bereitzustellen, die eine Geschwindigkeit umfassen.

**16.** Sende-/Empfangsvorrichtung (100) gemäß einem der Ansprüche 1 bis 15, bei der die Einrichtung (120) zum Bereitstellen der Notfalldaten ausgebildet ist, um die Notfalldaten automatisch bereitzustellen, wenn eine Notfallsituation von der Einrichtung (110) zum Detektieren der Notfallsituation detektiert wird.

**17.** Sende-/Empfangsvorrichtung (100) gemäß einem der Ansprüche 1 bis 16, bei der die Einrichtung (130) zum Aufbauen der Datenverbindung ausgebildet ist, um die Datenverbindung über eine Kurznachricht an das Informationszentrum aufzubauen.

**18.** Sende-/Empfangsvorrichtung (100) gemäß einem der Ansprüche 1 bis 17, bei der die Einrichtung (130) zum Aufbauen der Datenverbindung ausgebildet ist, um die Datenverbindung über das World Wide Web (WWW = World Wide Web) zu dem Informationszentrum aufzubauen.

**19.** Sende-/Empfangsvorrichtung (100) gemäß einem der Ansprüche 1 bis 18, bei der die Einrichtung (130) zum Aufbauen der Datenverbindung ausgebildet ist, um die Datenverbindung über ein Ad-Hoc-Netzwerk oder ein Multi-Hop-Netzwerk mit anderen Sende-/Empfangsvorrichtungen aufzubauen.

**20.** Sende-/Empfangsvorrichtung (100) gemäß einem der Ansprüche 1 bis 19, bei der die Einrichtung (130) zum Aufbauen der Datenverbindung ausgebildet ist, um die Datenverbindung automatisch aufzubauen, wenn eine Notfallsituation von der Einrichtung (110) zum Detektieren der Notfallsituation detektiert wird.

**21.** Sende-/Empfangsvorrichtung (100) gemäß einem der Ansprüche 1 bis 20, bei der die Einrichtung (140) zum Übertragen der Notfalldaten ausgebildet ist, um die Notfalldaten automatisch zu übermitteln, wenn eine Notfallsituation von der Einrichtung (110) zum Detektieren der Notfallsituation detektiert wird.

**22.** Sende-/Empfangsvorrichtung gemäß einem der Ansprüche 1 bis 21, die ferner eine Einrichtung zum Liefern von Empfangspegelmessungen einer Mehrzahl von Basisstations-Sende-Empfängern aufweist, wobei ein Basisstations-Sende-Empfänger eine Basisstations-Sende-Empfänger-Position aufweist, und die ferner eine Einrichtung zum Bestimmen der Position der Sende-/Empfangsvorrichtung (100) umfasst, basierend auf einer Kombination der Basisstations-Sende-Empfänger-Positionen.

**23.** Sende-/Empfangsvorrichtung (100) gemäß einem der Ansprüche 1 bis 22, die ferner
eine Einrichtung zum Erfassen von Signalen eines Senders eines Mobilfunknetzwerkes und wenigstens eines weiteren Senders umfasst, der sich im Empfangsbereich der Sende-/Empfangsvorrichtung (100) befindet;
eine Einrichtung zum Bereitstellen von Priorisierungsinformationen für den Sender des Mobilfunknetzes und den wenigstens einen weiteren Sender umfasst, wobei die Priorisierungsinformationen so ausgebildet sind, dass eine höhere Priorität zugeordnet wird für einen Sender, der eine genauere Lokalisierung der Sende-/Empfangsvorrichtung (100) erlaubt im Vergleich zu einem Sender, der eine ungenauere Lokalisierung der Sende-/Empfangsvorrichtung (100) erlaubt;
eine Einrichtung zum Auswählen von Lokalisierungsdaten des Senders umfasst, der eine höhere Priorität hat; und
eine Einrichtung zum Senden der Lokalisierungsdaten oder einer aus den Lokalisierungsdaten bestimmten Position aufweist.

**24.** Verfahren zur Kommunikation in einem Mobilfunknetzwerk, um Funkdaten an das Mobilfunknetzwerk zu übermitteln, mit folgenden Schritten:

Detektieren einer Notfallsituation;

Bereitstellen von Notfalldaten, die von einer geografischen Position einer Sende-/Empfangsvorrichtung abhängen, wobei die Notfalldaten unabhängig von einer detektierten Notfallsituation erfasst und aktualisiert werden, oder ansprechend auf eine detektierte Notfallsituation erfasst werden;

Aufbauen einer Datenverbindung zu einem Informationszentrum ansprechend auf eine detektierte Notfallsituation; und

Übermitteln der bereitgestellten Notfalldaten über die Datenverbindung an das Informationszentrum.

25. Computerprogramm zur Durchführung des Verfahrens gemäß Anspruch 24, wenn das Computerprogramm auf einem Computer ausgeführt wird.

```
┌──────────────┐
│  Einrichtung │
│     zum      │
│  Detektieren │
└──────────────┘
       │          110
```

┌──────────────┐   ┌──────────────┐   ┌──────────────┐
│  Einrichtung │   │  Einrichtung │   │  Einrichtung │
│     zum      │   │     zum      │   │     zum      │
│ Bereitstellen│   │  Übermitteln │   │   Aufbauen   │
└──────────────┘   └──────────────┘   └──────────────┘
       120                140                130

100

# FIG.1

FIG.2

220

Heimnetzwerk

230

POTS/ISDN
Netzwerk

240

Rettungsleitstelle

Notruf

Netzwerkbetreiber

250

Position in Karte mit
verbesserter Genauigkeit

SMS

genauer
bestimmte
Position

Informationszentrum

MS

Datenbank mit
Informationen
über Netzwerkinfrastruktur

270

210

FIG.3

FIG.4

15

| Nummer der nach Empfangsleistung abwärts sortieren Basisstations-Transceiver | |
|---|---|
| 1 (höchste Empfangsleistung) | $g_{i,x} = g_{i,y} = \dfrac{7}{28}$ |
| 2 | $g_{i,x} = g_{i,y} = \dfrac{6}{28}$ |
| 3 | $g_{i,x} = g_{i,y} = \dfrac{5}{28}$ |
| 4 | $g_{i,x} = g_{i,y} = \dfrac{4}{28}$ |
| 5 | $g_{i,x} = g_{i,y} = \dfrac{3}{28}$ |
| 6 | $g_{i,x} = g_{i,y} = \dfrac{2}{28}$ |
| 7 (niedrigste Empfangsleistung) | $g_{i,x} = g_{i,y} = \dfrac{1}{28}$ |

## FIG.5

FIG.6 (Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10345224
- WO 9815149 A